# EUROPÄISCHE PATENTSCHRIFT

(11) **EP 1 314 632 B1**
(45) Veröffentlichungstag und Bekanntmachung des Hinweises auf die Patenterteilung: **16.03.2011**
(21) Anmeldenummer: 02026001.4
(22) Anmeldetag: 21.11.2002
(51) Int. Cl.: B62D 21/11

(54) **Karosserie mit rahmenartigem Achsträger**
Vehicle body with axle-supporting frame
Carosserie avec berceau d'essieu en forme de cadre

(30) Priorität: 24.11.2001 DE 10157837
(43) Veröffentlichungstag der Anmeldung: 28.05.2003
(73) Patentinhaber: GM Global Technology Operations, Inc., Detroit, MI 48265-3000 (US)
(72) Erfinder: Öhlmann, Jörg, Dipl.-Ing., 64331 Weiterstadt (DE); Hofmann, Hendrik, Dipl.-Ing., 55270 Ober-Olm (DE)
(74) Vertreter: Strauss, Peter

(56) Entgegenhaltungen:
- EP-A- 1 188 643
- EP-A1- 1 306 289
- DE-A1- 19 634 601
- FR-A- 2 813 273
- JP-A- 2000 168 614
- US-A- 5 884 963

## Beschreibung

Die Erfindung betrifft eine Karosserie für ein Kraftfahrzeug mit zwei im Seitenbereich angeordneten Längsträgern, mit einer zwischen den Längsträgern angeordneten, als Tunnel ausgebildeten, in Längsrichtung des Kraftfahrzeuges verlaufenden Mittenverstärkung, mit einem rahmenartigen Achsträger und mit Stützen zur Befestigung des Achsträgers an der Mittenverstärkung, wobei die Stützen jeweils mit einem Längsträger verbunden sind.

Eine solche Karosserie wird bei heutigen Kraftfahrzeugen der unteren Mittelklasse häufig eingesetzt und ist aus der Praxis bekannt, siehe zum Beispiel das Dokument JP-2000 168614-A. Der Achsträger der bekannten Karosserie ist dabei als geschlossener Rahmen ausgebildet und haltert Querlenker von Vorderrädern sowie eine Antriebseinheit mit einer Brennkraftmaschine. Die Verbindung des Achsträgers mit angrenzenden Bereichen der Karosserie erfolgt seitlich über Stützelemente an den Längsträgern und an seinem einer Fahrgastzelle zugewandten Bereich ebenfalls über Stützelemente mit den an der in der Regel als Tunnel ausgebildeten Mittenverstärkung befestigten Stützen. Zumindest die erste Stützelemente sind dabei einteilig mit dem Achsträger gefertigt.

Aus der EP 0 743 237 B1 ist ein vorderes Fahrgestell an der Karosserie eines Kraftfahrzeuges bekannt, bei dem ein Tragrahmen mit den beiden Längsträgern und dem Tunnel verbunden ist. Hierdurch wird eine quer zur Fahrtrichtung des Kraftfahrzeuges angeordnete Brücke gebildet. Dies führt jedoch zu einem hohen Gewicht des vorderen Bereichs der Karosserie.

In der EP 1 306 289 A1, bei der es sich um einen nicht vorveröffentlichten Stand der Technik gemäß Art. 54 (3) handelt, wird eine Vorderbaustruktur eines Kraftfahrzeugs gezeigt, bei der ein rahmenförmiger Achsträger zwei nach hinten weisende Verlängerungen in Form von Stützen aufweist, die an einen nahe dem Mitteltunnel verlaufenden Längsträger und über Querholme, die Bestandteile des Karosserieaufbaus sind, auch an Seitenholme angeschlossen sind.

Gemäß der EP 1 188 643, bei der es sich ebenfalls um einen nicht vorveröffentlichten Stand der Technik gemäß Art. 54 (3) handelt, sind die der Fahrgastzelle zugewandten Stützen einerseits jeweils mit einem der Längsträger und andererseits mit einer die Stirnwand verstärkenden Querstrebe verbunden.

Der Erfindung liegt das Problem zugrunde, eine Karosserie der eingangs genannten Art so weiterzubilden, dass bei einem Frontalcrash des Kraftfahrzeuges auftretende Kräfte möglichst gleichmäßig von dem Achsträger in angrenzende Bereiche der Karosserie eingeleitet werden.

Dieses Problem wird erfindungsgemäß dadurch gelöst, dass die Stützen eine im Wesentlichen dreieckige Form aufweisen und dass ihre Eckbereiche an der Mittenverstärkung, dem Achsträger und jeweils einem der Längsträger verschraubt sind, so dass bei einem Frontalcrash des Kraftfahrzeuges die von dem Achsträger in Längsrichtung der Mittenverstärkung in die Karosserie eingeleiteten Kräfte von den Stützen gleichmäßig auf die Längsträger und die Mittenverstärkung verteilt werden.

Durch diese Gestaltung werden bei dem Crash auftretende Kräfte des Achsträgers von den Stützen gleichmäßig in die Mittenverstärkung und die Längsträger eingeleitet. Der Achsträger wird dank der Erfindung neben der Mittenverstärkung auch von den Längsträgern abgestützt und vermag daher besonders hohe Kräfte aufzunehmen. Somit ist eine genaue Steuerung der Krafteinleitung beim Crash von den an dem Achsträger befestigten Querlenkern in die an den Achsträger angrenzende Karosserie möglich. Hierdurch wird zudem eine Verkleinerung des Fußraums einer Fahrgastzelle des Kraftfahrzeuges beim Crash besonders gering gehalten. Ein weiterer Vorteil der Erfindung besteht darin, dass die Stützen seitliche, von dem entsprechenden Längsträger in Richtung der Mittenverstärkung einwirkende Kräfte abstützen können.

Eine Verkleinerung der Bodenfreiheit des die erfindungsgemäße Karosserie aufweisenden Kraftfahrzeuges durch die Stützen lässt sich einfach vermeiden, wenn die Stützen an einem, in Richtung der Mittenverstärkung weisenden Flansch der Längsträger befestigt sind.

Die Montage des Achsträgers an den angrenzenden Bereichen der Karosserie gestaltet sich besonders einfach, wenn Befestigungsbolzen der Stützen an den Längsträgern und der Mittenverstärkung vertikal angeordnet sind. Hierdurch lässt sich die Montage zudem automatisieren. Bei den Befestigungsbolzen handelt es sich vorzugsweise um Schraubbolzen.

Die Stützen weisen gemäß einer anderen vorteilhaften Weiterbildung der Erfindung eine besonders hohe Stabilität bei einem geringen Gewicht auf, wenn sie eine von einem abgewinkelten Rand begrenzte zentrische Ausnehmung aufweisen.

Zur weiteren Vergleichmäßigung der Einleitung der Kräfte in die erfindungsgemäße Karosserie trägt es bei, wenn die Befestigung der Stützen an den Längsträgern näher an der Befestigung an dem Achsträger angeordnet ist als die Befestigung der Stützen an der Mittenverstärkung.

Beim Crash des Kraftfahrzeuges lässt sich der Achsträger gemäß einer anderen vorteilhaften Weiterbildung der Erfindung nach unten hin von der Fahrgastzelle wegdrücken, wenn die Befestigungen der Stützen an den Längsträgern oberhalb einer Ebene der Befestigungen der Stützen an der Mittelverstärkung und an dem Achsträger angeordnet sind.

Zur weiteren Erhöhung der Stabilität der Stütze trägt es gemäß einer anderen vorteilhaften Weiterbildung der Erfindung bei, wenn die Stützen zwischen ihren Befestigungen an dem Achsträger und anderen Längsträgern eine Abwinklung aufweisen. Durch diese Gestaltung sind die Stützen jeweils an ihrer dem Längsträger zugesandten Seite steifer als an ihrer der Mittenverstärkung zugesandten Seite.

Die Erfindung lässt verschiedene Ausführungsformen zu. Zur weiteren Verdeutlichung ihres Grundprinzips ist eine davon in der Zeichnung dargestellt und wird nachfolgend beschrieben. Die Zeichnung zeigt in
- Fig. 1: eine schematische Darstellung eines Frontbereichs einer erfindungsgemäßen Karosserie in einer Ansicht von oben,
- Fig.2: eine vergrößerte, perspektivische Darstellung einer Stütze mit angrenzenden Bauteilen der erfindungsgemäßen Karosserie aus Figur 1.

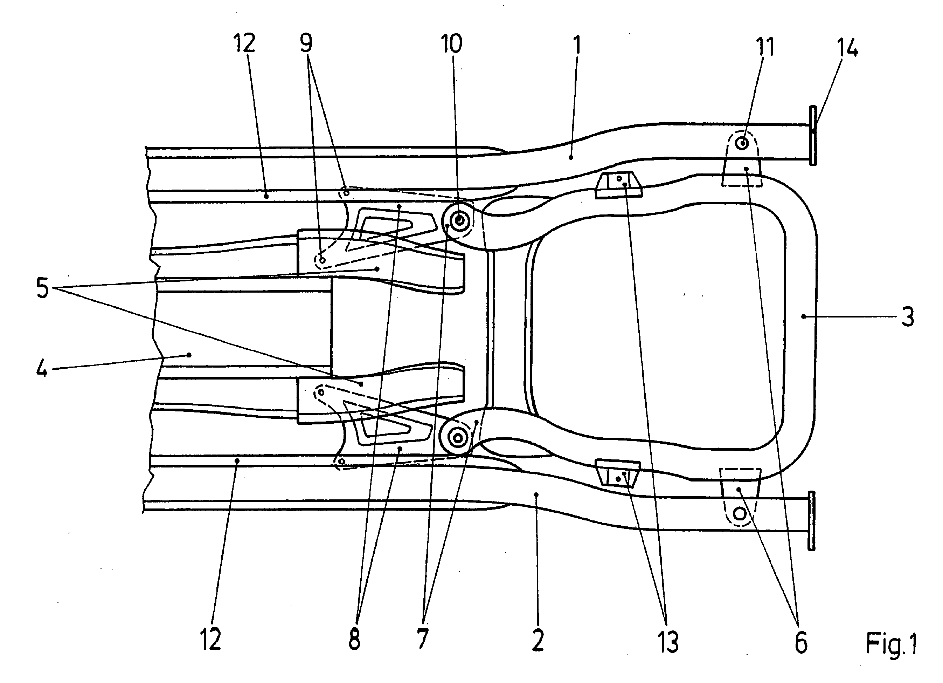

Figur 1 zeigt schematisch eine Karosserie eines Kraftfahrzeuges mit zwei seitlichen Längsträgern 1, 2 und mit einem rahmenartigen Achsträger 3 in einer Ansicht von oben. Zwischen den Längsträgern 1, 2 ist eine als Tunnel ausgebildete Mittenverstärkung 4 angeordnet, welche an ihrem dem Achsträger 3 zugewandten Ende zwei Profilteile 5 haltert. Der Achsträger 3 weist zwei seitliche Stützelemente 6 auf, mit denen er mit den Längsträgern 1, 2 verschraubt ist, und haltert an seinem der Mittenverstärkung 4 zugewandten Bereich zwei weitere Stützelemente 7. Im Wesentlichen dreieckig gestaltete Stützten 8 sind in ihren Eckbereichen mit den Stützelementen 7, der Mittenverstärkung 4 und den Längsträgern 1, 2 verschraubt. Die Befestigungen der Stützen 8 und der Stützelemente 6, 7 weisen jeweils vertikale, senkrecht zur Zeichenebene ausgerichtete, als Schraubbolzen ausgebildete Befestigungsbolzen 9 - 11 auf. Hierdurch lässt sich der Achsträger 3 von unten her gegen die Längsträger 1, 2 und die Mittenverstärkung 4 montieren. Die Längsträger 1, 2 weisen jeweils einen seitlichen Flansch 12 zur Verschraubung mit den Stützen 8 auf. Die Befestigung der Stützen 8 an den Längsträgern 1, 2 ist näher an dem Achsträger 3 angeordnet als die Befestigung der Stützen 8 an der Mittenverstärkung 4.

Bei einem Crash des Kraftfahrzeuges werden von dem Achsträger 3 in Längsrichtung der Mittenverstärkung 4 in die Karosserie eingeleitete Kräfte von den Stützen 8 gleichmäßig auf die Längsträger 1, 2 und die Mittenverstärkung 4 verteilt.

Weiterhin zeigt Figur 1, dass der Achsträger 3 Aufnahmen 13 zur Befestigung von nicht dargestellten Querlenkern für die Vorderräder des Kraftfahrzeuges hat. Die Längsträger 1, 2 weisen an ihrem freien Ende jeweils Flansche 14 zur Befestigung von weiteren Bauteilen eines Vorderbaus des Kraftfahrzeuges, beispielsweise eines nicht dargestellten Stoßfängers, auf.

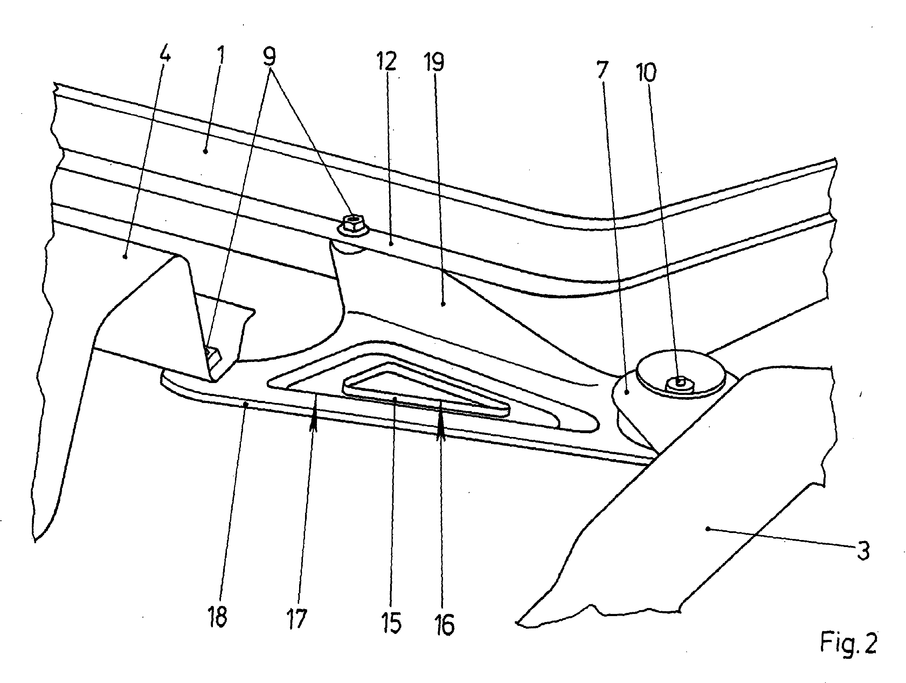

Figur 2 zeigt perspektivisch eine der Stützen 8 aus Figur 1 mit angrenzenden Bauteilen der Karosserie. Zur Vereinfachung der Zeichnung sind die an der Mittenverstärkung 4 befestigten Profilteile 5 aus Figur 1 in Figur 2 nicht dargestellt. Der Befestigungsbolzen 10 zur Verbindung des Stützelementes 7 mit der Stütze 8 ist zum Toleranzausgleich in einer hier verdeckten Käfigmutter eingedreht. Die Stütze 8 weist eine zentrische, von einem umlaufenden Rand 15 begrenzte Ausnehmung 16 auf. Diese Ausnehmung 16 ist in einer Vertiefung 17 angeordnet. Weiterhin hat die Stütze 8 einen umlaufenden Rand 18. Hierdurch hat die Stütze 8 eine besonders hohe Stabilität. Die Stütze 8 hat zudem zwischen ihren Befestigungen an dem Achsträger 3 und dem Längsträger 1 eine Abwinklung 19. Diese Abwinklung 19 gleicht einem Höhenunterschied zwischen der Befestigung der Stütze 8 an dem Längsträger 1 und den Befestigungen der Stütze 8 an der Mittenverstärkung 4 und dem Achsträger 3 aus. Weiterhin verleiht die Abwinklung 19 der Stütze 8 an ihrer dem Längsträger 1 zugewandten Seite eine besonders hohe Stabilität.

### Bezugszeichenliste

- 1, 2: Längsträger
- 3: Achsträger
- 4: Mittenverstärkung
- 5: Profilteil
- 6, 7: Stützelement
- 8: Stütze
- 9-11: Befestigungsbolzen
- 12: Flansch
- 13: Aufnahme
- 14: Flansch
- 15: Rand
- 16: Ausnehmung
- 17: Vertiefung
- 18: Rand
- 19: Abwinklung

## Patentansprüche

1. Karosserie für ein Kraftfahrzeug mit zwei im Seitenbereich angeordneten Längsträgern (1, 2), mit einer zwischen den Längsträgern (1, 2) angeordneten, als Tunnel ausgebildeten, in Längsrichtung des Kraftfahrzeuges verlaufenden Mittenverstärkung (4), mit einem rahmenartigen Achsträger (3) und mit Stützen (8) zur Befestigung des Achsträgers (3) an der Mittenverstärkung (4), wobei die Stützen (8) jeweils mit einem Längsträger (1, 2) verbunden sind, wobei die Stützen (8) eine im Wesentlichen dreieckige Form aufweisen und ihre Eckbereiche an der Mittenverstärkung (4), dem Achsträger (3) und jeweils einem der Längsträger (1, 2) verschraubt sind, so dass bei einem Frontalcrash des Kraftfahrzeuges die von dem Achsträger (3) in Längsrichtung der Mittenverstärkung (4) in die Karosserie eingeleiteten Kräfte von den Stützen (8) gleichmäßig auf die Längsträger (1, 2) und die Mittenverstärkung (4) verteilt werden.

2. Karosserie nach Anspruch 1, **dadurch gekennzeichnet, dass** die Stützen (8) an einem in Richtung der Mittenverstärkung (4) weisenden Flansch (12) der Längsträger (1, 2) befestigt sind.

3. Karosserie nach zumindest einem der vorhergehenden Ansprüche, **dadurch gekennzeichnet, dass** Befestigungsbolzen (9 - 11) der Stützen (8) an den Längsträgern (1, 2) und der Mittenverstärkung (4) vertikal angeordnet sind.

4. Karosserie nach zumindest einem der vorhergehenden Ansprüche, **dadurch gekennzeichnet, dass** die Stützten (8) eine von einem abgewinkelten Rand (15) begrenzte zentrische Ausnehmung (16) aufweisen.

5. Karosserie nach zumindest einem der vorhergehenden Ansprüche, **dadurch gekennzeichnet, dass** die Befestigung der Stützen (8) an den Längsträgern (1, 2) näher an dem Achsträger (3) angeordnet ist als die Befestigung der Stützen (8) an der Mittenverstärkung (4) .

6. Karosserie nach zumindest einem der vorhergehenden Ansprüche, **dadurch gekennzeichnet, dass** die Befestigungen der Stützen (8) an den Längsträger (1, 2) oberhalb einer Ebene der Befestigungen der Stützen (8) an der Mittenverstärkung (4) und an dem Achsträger (3) angeordnet sind.

7. Karosserie nach zumindest einem der vorhergehenden Ansprüche, **dadurch gekennzeichnet, dass** die Stützen (8) zwischen Ihren Befestigungen an dem Achsträger (3) und an den Längsträgern (1, 2) eine Abwinklung (19) aufweisen.

## Claims

1. A body for a motor vehicle, comprising two longitudinal beams (1, 2) arranged in the lateral region, a center reinforcement (4) arranged as a tunnel between the longitudinal beams (1, 2) and extending in the longitudinal direction of the motor vehicle, a frame-like axle carrier (3) and supports (8) for fixing the axle carrier (3) to the center reinforcement (4), with the supports (8) respectively being connected to a longitudinal beam (1, 2), the supports (8) having a substantially triangular shape and their corner regions being screwed together with the center reinforcement (4), the axle carrier (3) and one of the longitudinal beams (1, 2), so that in the event of a head-on crash of the motor vehicle the forces introduced by the axle carrier (3) into the vehicle body in the longitudinal direction of the center reinforcement (4) are distributed evenly by the supports (8) among the longitudinal beams (1, 2) and the center reinforcement (4).

2. A body according to claim 1, **characterized in that** the supports (8) are fastened to a flange (12) of the longitudinal beams (1, 2), which flange (12) faces in the direction of the center reinforcement (4).

3. A body according to at least one of the preceding claims, **characterized in that** the fixing bolts (9 to 11) of the supports (8) are vertically arranged on the longitudinal beams (1, 2) and the center reinforcement (4).

4. A body according to at least one of the preceding claims, **characterized in that** the supports (8) have a centric recess (16) which is delimited by a bent edge (15).

5. A body according to at least one of the preceding claims, **characterized in that** the fixing of the supports (8) to the longitudinal beams (1, 2) is arranged closer to the axle carrier (3) than the fixing of the supports (8) to the center reinforcement (4).

6. A body according to at least one of the preceding claims, **characterized in that** the fixings of the supports (8) to the longitudinal beams (1, 2) are arranged above a plane of the fixings of the supports (8) to the center reinforcement (4) and the axle carrier (3).

7. A body according to at least one of the preceding claims, **characterized in that** the supports (8) have a bent portion (19) between their fixings to the axle carrier (3) and the longitudinal beams (1, 2).

## Revendications

1. Carrosserie pour un véhicule à moteur avec deux longerons (1, 2) disposés dans la partie latérale, avec un renfort central (4) disposé entre les longerons (1, 2), conformé comme un tunnel et s'étendant dans le sens longitudinal du véhicule à moteur, avec un support d'essieu (3) en forme de cadre et avec des étais (8) pour la fixation du support d'essieu (3) sur le renfort central (4), dans laquelle les étais (8) sont reliés chacun à un longeron (1, 2), dans laquelle les étais (8) présentent une forme sensiblement triangulaire et leurs parties d'angle sont vissées sur le renfort central (4), le support d'essieu (3) et un des longerons (1, 2), de sorte qu'en cas de collision frontale du véhicule à moteur, les forces exercées par le support d'essieu (3) dans le sens longitudinal du renfort central (4) sur la carrosserie soient réparties uniformément par les étais (8) sur les longerons (1, 2) et le renfort central (4).

2. Carrosserie selon la revendication 1, **caractérisée en ce que** les étais (8) sont fixés sur une bride (12) des longerons (1, 2) orientée en direction du renfort central (4).

3. Carrosserie selon l'une au moins des revendications précédentes, **caractérisée en ce que** des boulons de fixation (9-11) des étais (8) sur les longerons (1, 2) et le renfort central (4) sont disposés verticalement.

4. Carrosserie selon l'une au moins des revendications précédentes, **caractérisée en ce que** les étais (8) présentent un évidement centré (16) délimité par un bord plié (15).

5. Carrosserie selon l'une au moins des revendications précédentes, **caractérisée en ce que** la fixation des étais (8) sur les longerons (1, 2) est disposée plus près du support d'essieu (3) que la fixation des étais (8) sur le renfort central (4).

6. Carrosserie selon l'une au moins des revendications précédentes, **caractérisée en ce que** les fixations des étais (8) sur les longerons (1, 2) sont disposées au-dessus d'un plan des fixations des étais (8) sur le renfort central (4) et le support d'essieu (3).

7. Carrosserie selon l'une au moins des revendications précédentes, **caractérisée en ce que** les étais (8) présentent une pliure (19) entre leurs fixations sur le support d'essieu (3) et sur les longerons (1, 2).
